(19) Europäisches Patentamt
European Patent Office
Office européen des brevets

(11) Publication number: 0 050 032
B1

(12) EUROPEAN PATENT SPECIFICATION

(45) Date of publication of patent specification: 02.05.84

(51) Int. Cl.³: F 02 M 37/00, F 02 M 31/16, F 02 M 55/00

(21) Application number: 81304749.5

(22) Date of filing: 12.10.81

# (54) Diesel engine fuel temperature control system.

(30) Priority: 14.10.80 US 196511

(43) Date of publication of application:
21.04.82 Bulletin 82/16

(45) Publication of the grant of the patent:
02.05.84 Bulletin 84/18

(84) Designated Contracting States:
AT BE CH DE FR GB IT LI SE

(56) References cited:
FR - A - 2 386 692
GB - A - 2 031 994
US - A - 3 768 454

(73) Proprietor: DEERE & COMPANY
1 John Deere Road
Moline Illinois 61265 (US)

(72) Inventor: Naylor, Jimmy Cameron
R.R.I. Hudson
Iowa 50643 (US)
Inventor: Norton, Richard Gene
102 Stacey Circle
Hudson Iowa 50643 (US)

(74) Representative: Pears, David Ashley et al,
REDDIE & GROSE 16 Theobalds Road
London WC1X 8PL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 050 032 B1

# Diesel engine fuel temperature control system

This invention relates to a fuel temperature control system for a diesel engine, of the type set out in the introductory part of claim 1.

For vehicles with diesel engines, it has always been advantageous to preheat the cold fuel coming from the fuel tank before its introduction to the injection pump. Cold fuel is more viscous and also it tends to produce more power. This extra power becomes detrimental to the components of an engine when it exceeds the rated capacity of the engine. Secondly, a more noticeable problem is that with cold fuel, the operator has an increase in power from his vehicle. As the fuel warms up as the vehicle is operated, the operator experiences a gradual decrease in power and tends to believe it is due to some malfunctioning of the engine.

In order to warm up the fuel, various vehicle manufacturers have tried several different approaches. One system uses the water jacket of the engine to preheat the fuel. Once the water is heated by the combustion in the cylinders, the heat is transferred, by a heat exchanger, to warm up the fuel. A second approach uses a separate heater to preheat the fuel. An advantageous system of a further type set out in the introductory part of claim 1 is known from US—A—3,768,454. The injection pump heats the fuel and the system uses a temperature sensitive proportioning valve. The valve is responsive to the temperature of the fuel at the inlet of the feed line for dividing the flow of the fluid from the return line between the tank return line and the line to the injection pump.

The object of the present invention is to provide a system of the known kind with an improved means for shutting off the engine.

The invention is defined by the features of claim 1 and advantageous developments of the invention are defined in the dependent claims. The injection pump can employ a gallery and plunging mechanism such as is known in the art, in which approximately half of the fuel is supplied to the different combustion cylinders while the surplus fuel is either re-routed to the fuel tank or used to warm up the incoming fuel. The unused fuel is raised in temperature within the injection pump by the action of the gallery and plunging mechanism. When the sensed temperature is below a predetermined value, the sensor will relay a signal to the fluid control valve to divert either a portion of or all of the heated surplus fuel in the return line. This heated fuel is then routed through a fuel bypass line to an upstream position of the transfer pump. As the warm, unused fuel mixes with the cold incoming fuel from the fuel tank, it causes the temperature of the mixture to rise. As the mixture approaches the predetermined temperature, the temperature sensor will instruct the fluid control valve to adjust the flow of the unused, heated fuel so that the predetermined temperature value can be maintained. The portion of the unused, heated fuel which is not used is returned to the fuel tank.

In addition to the above-mentioned elements, a shutoff valve is positioned across the fuel supply line upstream of the transfer pump and acts to prevent fuel from flowing to the injection pump once the engine is turned off. This shutoff valve diverts the flow of the incoming fluid that would normally pass from the fuel tank to the transfer pump and also recirculates the fuel in the fuel supply line which was destined for the injection pump.

The invention will now be described in more detail, by way of example, with reference to the accompanying drawings in which:

Fig. 1 is a flow diagram of an improved fuel temperature control system embodying the invention when the engine is running and the incoming fuel is cold,

Fig. 2 is a flow diagram of the control system when the engine is running and the incoming fuel is warm,

Fig. 3 is a flow diagram when the engine is stopped and the fuel in the fuel tank is warm, and

Fig. 4 is a flow diagram when the engine is stopped and the fuel in the tank is cold.

Fig. 1 shows a fuel temperature control system 10 designed for attachment to a vehicle having a diesel engine wherein the diesel engine is running and fuel in a fuel tank is cold. The system 10 comprises a fuel tank 12 holding diesel fuel 11. The fuel 11 is directed out of the fuel tank 12 through a fuel supply line 14 to a prefilter 16. The prefilter 16 is designed to remove essentially all the water which may be present in the fuel 11. From the prefilter 16, the fuel 11 is directed through a shutoff valve 20 to a transfer pump 22 via fuel supply lines 18 and 19, respectively. The transfer pump 22 can be any type of fuel pump which is capable of drawing the fuel 11 out of the fuel tank 12. From the transfer pump 22, the fuel 11 is routed to a fuel filter 26 via fuel supply lines 24 and 25, respectively. The fuel filter 26 is capable of filtering out any contaminants including water which may still be present in the fuel 11. From the fuel filter 26, the fuel is routed through a fuel supply line 28 which passes through the shutoff valve 20. From the shutoff valve 20, the fuel 11 is routed via a fuel supply line 29 into an injection pump 30.

The injection pump 30 can be any type of conventional injection pump which uses a gallery and plunging mechanism to distribute the fuel 11 to each cylinder of the engine. Such gallery mechanisms employ plungers which direct only a portion of the fuel to each cylinder of the engine and force out the unused, heated fuel. Preferably, approximately half of the fuel is directed to the cylinders of the engine and the remaining half of the fuel is not used. The unused portion of the fuel 11 is heated up by the reciprocative action of the plungers within the gallery mechanism. This unused, heated fuel 11 leaves the injection pump 30 via return line 31 and a check valve 34, which prevents the unused fuel from flowing back into the injection pump 30.

From the check valve 34, the unused, heated fuel is routed through a return line 32 into a temperature control device 36. The temperature control device 36 has a temperature sensor 38 connected to a fluid control valve 40. The temperature sensor 38 is connected between the fuel supply lines 24 and 25 and senses the temperature of the passing fluid 11. The temperature sensor 38 actuates the fluid control valve 40, depending on the temperature of the fuel which it senses and the sensor can be a conventional wax bulb thermostat actuator. The fluid control valve 40, in turn, controls the direction of the flow of the unused, heated fuel 11 in the return line 32. Preferably, the fluid control valve 40 is a bi-directional control valve such as a spool valve.

The fluid control valve 40 can direct the unused, heated fuel 11 either through a return line 33 back into the fuel tank 12 or through a fuel bypass line 42 which is connected to the fuel supply line 19 located upstream of the transfer pump 22. Because the fluid control valve 40 is a regulatory valve, it is capable of proportioning the flow or supplying the complete flow through either line 33 or 42. In Fig. 1, the fuel is cold and the valve is shown returning all surplus fuel from the pump 30 to the inlet of the pump 22.

Referring now to Fig. 2, a flow diagram is shown for a vehicle having a diesel engine in which the fuel 11 is warm and the engine is running. Such will be the case after the vehicle has been operated for a period of time. In this case, the fluid control valve 40 is positioned so as to direct the unused, heated fuel 11 in the return line 32 to the return line 33 and then back to the fuel tank 12. No intermixing of the fuel is necessary.

Referring now to Fig. 3, a flow diagram is shown for a vehicle having an engine which is not running but with warm fuel. Such a situation occurs when a vehicle which has been running is turned off. In this case, the flow direction of the fuel 11 is changed by the shutoff valve 20 and the fuel 11 in the fuel supply line 28 is directed back through the fuel supply lines 18 and 14 into the fuel tank 12. In addition, the fuel 11 contained in the fuel supply line 29 is directed back in a reverse direction through the shutoff valve 20, the transfer pump 22 and into the fuel tank 12. The action starves the injection pump 30 of the fuel 11 and causes the engine to stop.

In Fig. 4, a flow diagram is shown for a vehicle having a non-running engine and cold fuel 11 in the fuel tank 12. Such will be the case when a vehicle has been standing idle for an extended period of time, for example, overnight. In this case, the fluid control valve 40 directs all of the unused, heated fuel 11 from the injection pump 30 via return line 32 and the fuel bypass line 42 to an upstream position of the transfer pump 22. In addition, the shutoff valve 20 is positioned so as to route all of the fuel 11 contained in the fuel line 29 back to the fuel tank 12.

The valve 20 can be operated automatically between the positions of Figs. 1 and 2 on the one hand and Figs. 3 and 4 on the other hand, under control of the "ignition switch"; it may be a solenoid valve.

Thus in the second position (figs. 3 and 4) of the valve 20, not only is all pumped fluid returned to the tank 12 but the input line 29 for the injection pump is also exhausted to the tank, to stop the engine quickly.

## Claims

1. A fuel temperature control system for a diesel engine comprising an injection pump (30) which returns a portion of surplus, heated fuel to a proportioning valve (40) which is controlled by a fuel temperature sensor (38) to proportion the surplus fuel between a return line (33) to the fuel tank (12) and a region upstream of the temperature sensor (38) whereat surplus, heated fuel is mixed with fuel feeding from the tank to the injection pump, characterised by a shut-off valve (20) having an engine running position in which it connects a feed line (14) from the tank (12) to the inlet side of the temperature sensor (38) and connects the outlet of the temperature sensor (38) to the inlet of the injection pump, and an engine shut-off position in which it connects the inlet of the injection pump to the inlet side of the temperature sensor and the outlet of the temperature sensor (38) to the said feed line (14).

2. A system according to claim 1, characterised in that the said region is on the inlet side of a transfer pump (22) drawing fuel from the tank (12) and feeding fuel to the injection pump (30), the temperature sensor (38) sensing the temperature of the fuel between the transfer pump and the injection pump.

3. A system according to claim 2, characterised in that the shut-off valve (20) is an electric valve.

4. A system according to any of claims 1 to 3, characterised in that the proportioning valve (40) is a bidirectional valve.

## Revendications

1. Système de réglage de la température du carburant pour moteur Diesel comportant une pompe d'injection (30) qui renvoie une partie du carburant chauffé excédentaire à une valve de répartition (40) qui est commandée par une sonde ou un capteur (38) détectant la température du carburant, pour répartir le carburant excédentaire entre un conduit de retour (33) rejoignant le réservoir de carburant (12) et une zone située en amont de la sonde thermique (38), dans laquelle le carburant chauffé excédentaire est mélangé avec du carburant s'écoulant du réservoir vers la pompe d'injection, caractérisé par une valve d'arrêt (20) comportant une position de marche du moteur dans laquelle elle relie un conduit d'alimentation (14) provenant du réservoir (12) au côté entrée de la sonde thermique (38) et la sortie de cette sonde thermique (38) à l'entrée de la pompe d'injection, et une position d'arrêt du moteur dans laquelle elle relie l'entrée de la pompe d'injection au côté entrée de la sonde thermique (38) et la sortie de cette sonde thermique à ce conduit d'alimentation (14).

2. Système suivant la revendication 1, caractérisé en ce que cette zone se trouve sur le côté entrée d'une pompe de transfert (22) prélevant du carburant au réservoir (12) et envoyant le carburant à la pompe d'injection (30), la sonde thermique (38) détectant la température du carburant entre la pompe de transfert et la pompe d'injection.

3. Système suivant la revendication 2, caractérisé en ce que la valve d'arrêt (20) est une électrovalve.

4. Système suivant l'une quelconque des revendications 1 à 3, caractérisé en ce que la valve de répartition (40) est une valve bidirectionnelle.

**Patentansprüche**

1. Kraftstofftemperatur-Kontrollsystem für einen Dieselmotor, welches eine Einspritzpumpe (30) umfaßt, welche einen Teil von überschüssigem erhitzten Kraftstoff einem Zuteilventil (40) zurückführt, welches durch einen Kraftstofftemperaturfühler (38) kontrolliert wirt, um den überschüssigen Kraftstoff zwischen einer Rückführungsleitung (33) zum Kraftstofftank (12) und einem Bereich stromaufwärts von dem Temperaturfühler (38) aufzuteilen, wo der überschüssige erhitzte Kraftstoff mit Kraftstoff gemischt wird, der von dem Tank der Einspritzpumpe zugeführt wird, gekennzeichnet durch ein Schließventil (20) welches eine Stellung bei laufendem Motor aufweist, in welcher das Ventil eine Speiseleitung (14) vom Tank (12) mit der Einlaßseite des Temperaturfühlers (38) verbindet sowie den Auslaß des Temperaturfühlers (38) mit dem Einlaß der Einspritzpumpe in Verbindung bringt, sowie eine Motorabschaltstellung, in der das Ventil den Einlaß der Einspritzpumpe mit der Einlaßseite des Temperaturfühlers und den Auslaß des Temperaturfühlers (38) mit der besagten Speiseleitung (14) verbindet.

2. System nach Anspruch 1, dadurch gekennzeichnet, daß der benannte Bereich sich auf der Einlaßseite einer Überführungspumpe (22) befindet, welche Kraftstoff vom Tank (12) ansaugt und Kraftstoff der Einspritzpumpe (30) zuspeist, wobei der Temperaturfühler (38) die Temperatur des Kraftstoffes zwischen der Überführungspumpe und der Einspritzpumpe abtastet.

3. System nach Anspruch 2, dadurch gekennzeichnet, daß das Schließventil (20) ein elektrisches Ventil ist.

4. System nach irgendeinem der Ansprüche 1 bis 3, dadurch gekennzeichnet, daß das Zuteilventil (40) ein Zweirichtungsventil ist.

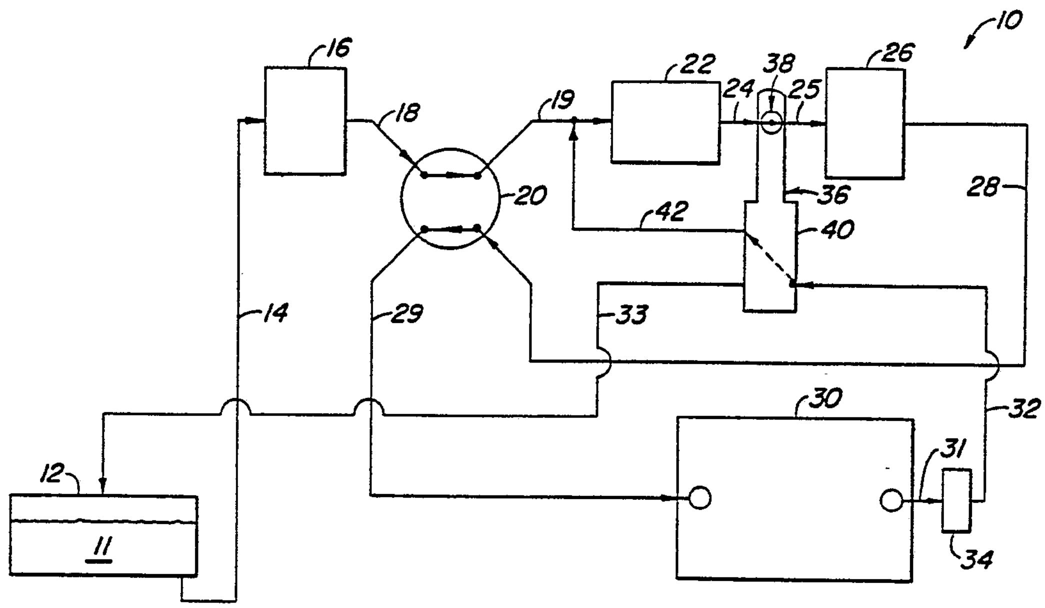
10
16
22
38
26
24
25
18
19
20
36
28
42
40
14
29
33
30
32
12
31
11
34

FIG. 1

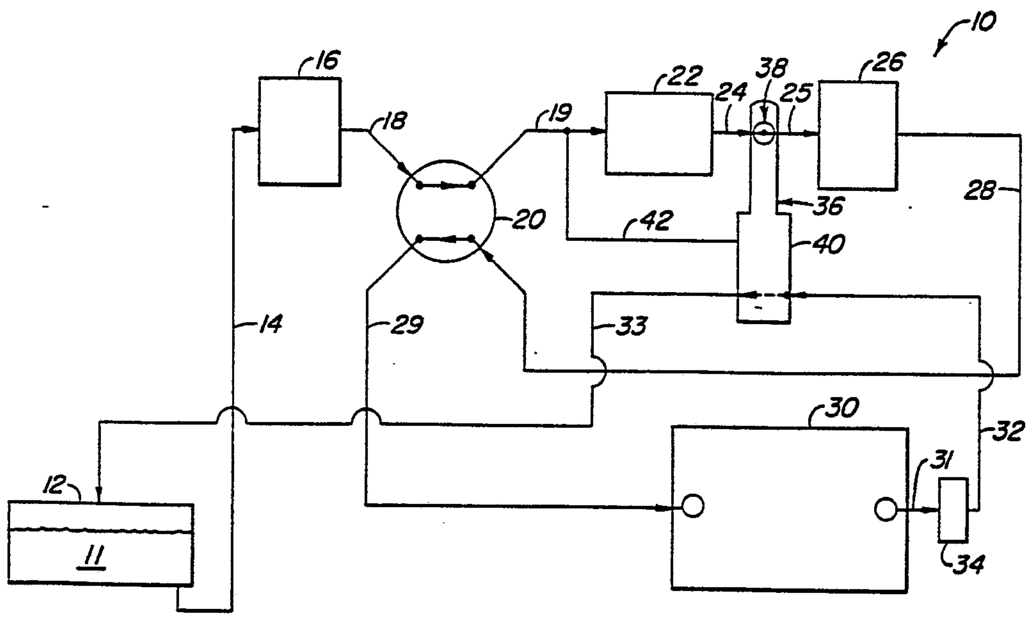
10
16
22
38
26
24
25
18
19
20
36
28
42
40
14
29
33
30
32
12
31
11
34

FIG. 2

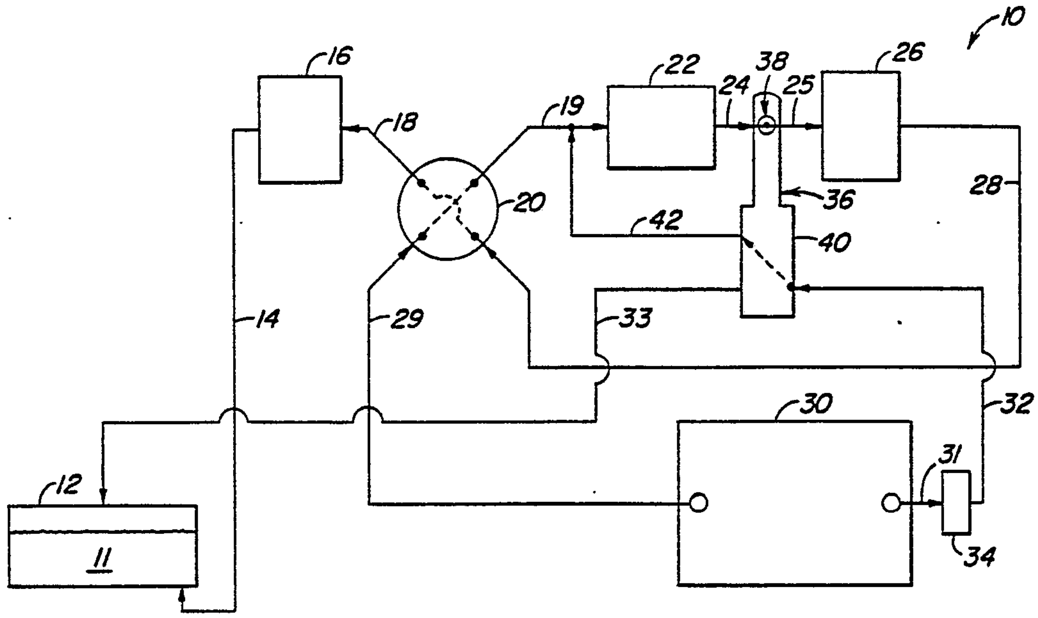
10
16
22
38
24
25
26
18
19
20
36
28
42
40
14
29
33
32
30
31
12
11
34

FIG. 4

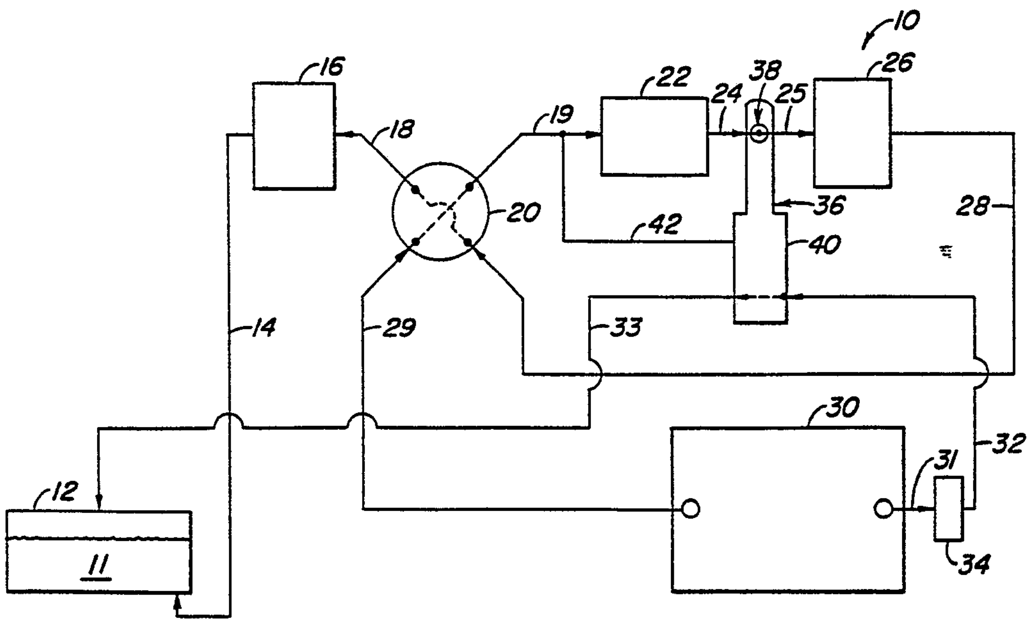
10
16
22
24
38
25
26
18
19
20
36
28
42
40
14
29
33
30
32
31
12
11
34

FIG. 3